# EUROPEAN PATENT SPECIFICATION

(11) **EP 3 511 295 B1**
(45) Date of publication and mention of the grant of the patent: **17.01.2024**
(21) Application number: 18205621.8
(22) Date of filing: 12.11.2018
(51) Int. Cl.: C01B 15/023

(54) **METHOD FOR PREPARATION OF ISOTOPICALLY LABELED HYDROGEN PEROXIDE**
VERFAHREN ZUR HERSTELLUNG VON ISOTOPISCH MARKIERTEM WASSERSTOFFPEROXID
PROCÉDÉ DE PRÉPARATION DE PÉROXYDE D'HYDROGÈNE ÉTIQUETÉ ISOTOPIQUEMENT

(30) Priority: 15.01.2018 SI 201800006
(43) Date of publication of application: 17.07.2019
(73) Proprietor: Univerza V Ljubljani, 1000 Ljubljana (SI)
(72) Inventor: Cerkovnik, Janez, 1000 Ljubljana (SI)
(74) Representative: Jersan, Tatjana

(56) References cited:
- EP-A1- 0 280 597
- US-A- 5 611 889
- US-A- 5 785 943
- US-B1- 8 507 286

## Description

### Object of invention

The object of the invention is a method for the preparation of isotopically labelled hydrogen peroxide, which belongs to the field of chemistry, more particularly to the field of organic, inorganic, analytical, physical and bioorganic chemistry, and also to the field of pharmaceutical chemistry, medicinal chemistry, biochemistry, chemical biology and molecular biology.

### Techical problem

Hydrogen peroxide (HOOH), higher water homolog (HOH), is an extremely important and frequently used compound for research purposes and also in almost all industrial fields, particularly in chemical synthesis industry, textile and paper industry, metallurgy, industry of detergents and electronics, in waste water cleaning and environmental protection. The only degradation product of hydrogen peroxide is water, and thus it plays a key role in numerous environmentally friendly methods in the chemical industry. On an industrial scale, hydrogen peroxide is produced by anthraquinone oxidation. Several alternative methods have been developed for the preparation of small amounts of hydrogen peroxide for laboratory purposes, said methods being mostly based on a reaction between hydrogen (H₂) and oxygen (O₂) using various catalysts. The main disadvantages of these methods are low efficiency and yield of the reaction.

The technical problem that is not successfully solved is the method for the preparation of D, 17-0 and 18-0 isotopically labelled hydrogen peroxide, which is shown on an example of the anthraquinone process in Scheme 1 and has a huge potential application in research laboratories and for commercial purposes. An efficient method for the preparation represents a particular challenge because of an extremely high price of the commercially available oxygen isotopes (¹⁷O₂ and ¹⁸O₂) as the key raw materials. 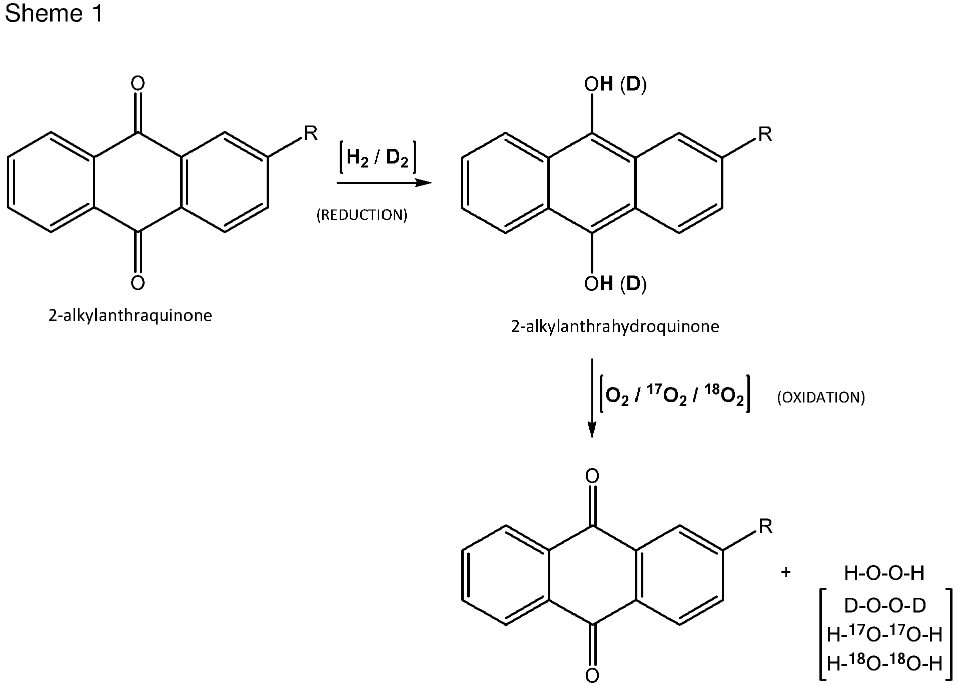 wherein R represents hydrogen, alkyl, substituted alkyl, cycloalkyl, substituted cycloalkil, aryl or substituted aryl,

The task and the goal of the invention is to create a simple and efficient method for the preparation of D, 17-0 and 18-0 isotopically labelled hydrogen peroxide (D-O-O-D, H-¹⁷O-¹⁷O-H and H-¹⁸O-¹⁸O-H) originating from simple and widely available chemicals, with a simultaneously high yield due to a high price of the oxygen isotopes ¹⁷O₂ and ¹⁸O₂ as raw materials.

Hydrogen peroxide is hugely important both in chemistry and everyday life as it is used in almost all industrial areas: chemical, pharmaceutical, food, textile and paper industry, metallurgy, the industry of detergents and electronics, waste water cleaning and environmental protection, in the area of health care and biology. Nowadays, numerous methods for the preparation of hydrogen peroxide on an industrial scale are known, a majority of them based on the oxidation of anthraquinones and to a smaller extent also on the oxidation of alcohols. In practice, the method is carried out as a continuous two-stage catalysed reduction-oxidation process (Ullmann's Encyclopedia of Industrial Chemistry, Vol. A13 (Eds.: B. Elvers, S. Hawkins, M. Ravenscroft, G. Schulz), VCH, Weinheim, 1989, pp. 443-466). Such examples are disclosed in patent applications and patents US2158525 (1939), DE3538816 (1987), WO9940024 (1999), EP1245534 (2002), WO02076886 (2002), and US2479111 (1949), DE935303 (1955), US5254326 (1993), WO2000046145 (2000), EP0839760 (1998) and EP1074548 (2001). Several alternative methods have been developed for the preparation of small amounts of hydrogen peroxide for laboratory purposes, said methods being mostly based on a reaction between hydrogen (H₂) and oxygen (O₂) using various catalysts *(*Angew. Chem. Int. Ed. 2006, 45, 6962-6984). Some examples are described in patent applications and patents US 1108752 (1914), GB1056123 (1967), DE2710279 (1977), DE2655920 (1977), US4336240 (1982), EP132294 (1985), US4661337 (1987), EP342047 (1989), US4832938 (1989), JP63156005 (1988), EP364374 (1990), EP366419 (1990), US5135731 (1992), US5169618 (1992), EP504741 (1992), JP0570107 (1993), WO9204277 (1992), JP05270806 (1993), WO9314025 (1993), JP06191804 (1994), WO9215520 (1992), EP537836 (1993), JP07069604 (1995), JP07069605 (1995), JP08002904 (1996), US5480629 (1996), US5641467 (1997), US 5800796 (1998), EP0816286 (1998), US5965101 (1999), WO9949971 (1999), WO9941190 (1999), US6042804 (2000), WO0105498 (2001), WO0105501 (2001) and US 6168775 (2001). The main disadvantages of the alternative laboratory methods are low efficiency and yield of the reaction.

### Detailed description of invention

The present invention refers to a general method of hydrogen peroxide synthesis and subsequently to a method for the preparation of isotopically labelled hydrogen peroxide. Unlike the hitherto known methods, the method of the invention enables a simple, quick and efficient preparation of the D, 17-0 and 18-0 isotopically labelled hydrogen peroxide. The method of the invention inter alia avoids the problem of the use of catalysts, work at an increased temperature and low yield. Having regard to the foregoing, the method of the invention is safe, economical and suitable for commercial application.

The method for the preparation of isotopically labelled hydrogen peroxide according to the present invention is shown in Scheme 2.

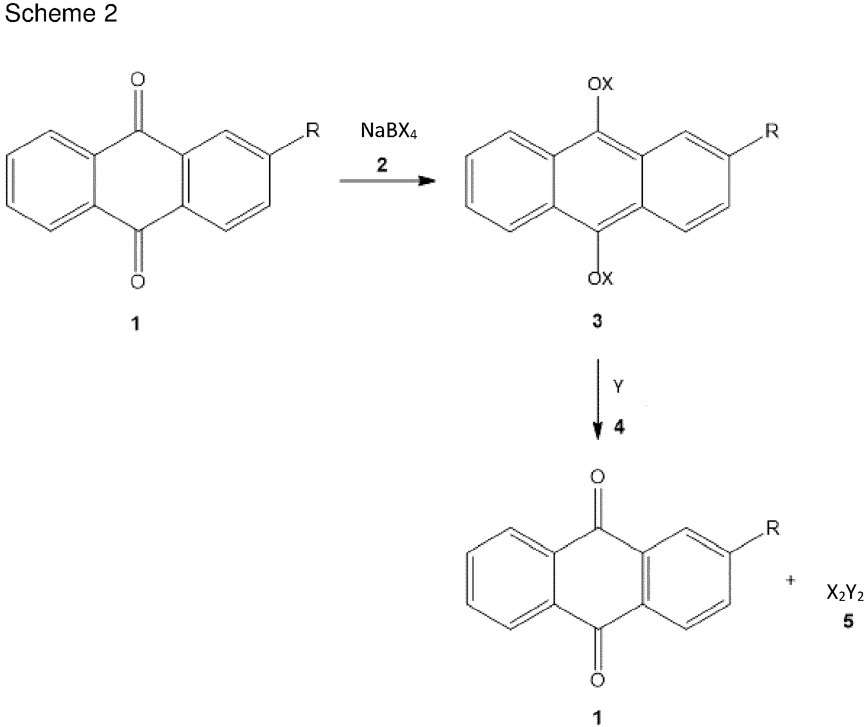

The method is characterized by including a reaction between 2-alkylanthraquinone denoted with Formula 1 and a reducing agent denoted with Formula 2, wherein 2-alkylanthrahydroquinone denoted with Formula 3 is produced, which is oxidised by oxygen or oxygen isotope denoted with Formula 4, to 2-alkylanthraquinone denoted with Formula 1 and isotopically labelled hydrogen peroxide denoted with Formula 5,
wherein R represents hydrogen, alkyl, substituted alkyl, cycloalkyl, substituted cycloalkil, aryl or substituted aryl, and when
X represents hydrogen (H), Y represents oxygen isotope ¹⁷O or ¹⁸O, and when X represents deuterium (D), Y represents oxygen.

R preferably represents alkyl, more preferably methyl, ethyl or 1-propil, R even more preferably represents methyl or ethyl, and R most preferably represents ethyl.

The method is carried out at a temperature between 15 and 40 °C, preferably at room temperature, in a separating funnel in toluene, xylene, methyl acetate or ethyl acetate and the mixtures thereof as solvent, the solvent is more preferably a mixture of toluene and methyl acetate in a volume ratio 1:1. The reaction between compound 1 and compound 2 is preferably carried out in equivalent amounts of compound 1 and compound 2 or up to 10% excess of compound 2, i. e. reducing agent dissolved in alcohol, most preferably in methanol and ethanol, even more preferably in ethanol. The intermediate compound 3 resulting from the reaction between compound 1 and compound 2 is then rinsed with water and then oxidized by an equivalent amount of Y, wherein Y has the above-indicated meaning. The obtained isotopically labelled hydrogen peroxide is precipitated from the solution and separated, the remaining isotopically labelled hydrogen peroxide that still remains undissolved in the reaction mixture is extracted with water. The combined water phases are preferably concentrated at a reduced pressure.

The object of the invention is the isotopically labelled hydrogen peroxide denoted with Formula 5

X₂Y₂ (5),

wherein when X represents hydrogen (H), Y represents oxygen isotope ¹⁷O or ¹⁸O, and when X represents deuterium (D), Y represents oxygen, namely isotopically labelled hydrogen peroxide D₂O₂ (D-O-O-D), H₂¹⁷O₂ (H-¹⁷O-¹⁷O-H) and H₂¹⁸O₂ (H-¹⁸O-¹⁸O-H).

The present invention refers to compounds denoted with Formula 5, wherein X and Y have the meanings as indicated above, and to the use thereof for research and commercial purposes.

In the following, the present invention will be illustrated by examples.

### General method for the preparation of hydrogen peroxide H₂O₂

2-alkylanthraquinone (2.84 g, 12 mmol) is dissolved in a mixture of toluene (40 mL) and methyl acetate (20 mL) in a separating funnel and the mixture is bubbled with argon for 10 minutes. A solution of NaBH₄ (0.23 g, 6 mmol) is separately prepared in 25 mL of ethanol and also bubbled with argon for 10 minutes. The solution of NaBH₄ is then added to the solution of 2-alkylanthraquinone by simultaneously bubbling and mixing with an argon flow. The colour of the starting solution changes from yellow to dark green. The reaction mixture is further stirred for 20 minutes with a flow of argon, then 30 mL of degassed water is added to extract the by-products of reduction and ethanol. The water phase is separated from the organic phase and then oxygen is gradually added to the solution through a septum with an injection needle under intense agitation. The dark green colour of the organic phase turns back to yellow, which is indicative of the fact that an equivalent amount of oxygen was added. The hydrogen peroxide solution is gradually precipitated at the bottom of the separating funnel while the funnel is sporadically and attentively rotated. The hydrogen peroxide solution is transferred from the separating funnel by an injection needle, concentrated, and the traces of organic solvents are removed at reduced pressure. The hydrogen peroxide dissolved in the organic phase is extracted with water (4x1 mL). The combined water phases are then concentrated at a reduced pressure.

### Example 1: Deuterated hydrogen peroxide, D₂O₂

The deuterated hydrogen peroxide solution D₂O₂ was prepared following the above-described general method from 2-ethylanthraquinone (2.84 g, 12 mmol), NaBD₄ 0.252 g, 6 mmol) dissolved in deuterated ethanol (CH₃CH₂OD) and commercially available oxygen in a bottle. Description: colourless liquid. Mr: 36.02 gmol⁻¹. Yield: 65% (265 mg). ²H NMR (600 MHz, acetone-d₆): δ 11.0 ppm. LC/ESI-HRMS calculated for D₂O₂: *m*/*z* = 37.018 (MH⁺); determined: *m*/*z* = 37.016 (MH⁺).

### Comparative example:

16-0 isotopically labelled hydrogen peroxide, H₂¹⁶O₂ The 16-0 isotopically labelled hydrogen peroxide solution H₂¹⁶O₂ was prepared following the above-described general method from 2-ethylanthraquinone (2.84 g, 12 mmol), NaBH₄ 0.228 g, 6 mmol) and 16-0 isotopically labelled oxygen (¹⁶O₂). Description: colourless liquid. Mr: 34.01 gmol⁻¹. Yield: 62% (253 mg). ¹H NMR (600 MHz, acetone-d₆): δ 11.5 ppm. LC/ESI-HRMS calculated for H₂¹⁶O₂: *m*/*z* = 35.005 (MH⁺); determined: *m*/*z* = 35.004 (MH⁺).

### Example 2: 17-O isotopically labelled hydrogen peroxide, H₂¹⁷O₂

The 17-0 isotopically labelled hydrogen peroxide solution H₂¹⁷O₂ was prepared following the above-described general method from 2-ethylanthraquinone (2.84 g, 12 mmol), NaBH₄ 0.228 g, 6 mmol) and 17-0 isotopically labelled oxygen (¹⁷O₂). Description: colourless liquid. Mr: 36.01 gmol⁻¹. Yield: 58% (251 mg). ¹H NMR (600 MHz, acetone-d₆): δ11.5 ppm. ¹⁷O NMR (600 MHz, acetone-d₆): δ185 ppm. LC/ESI-HRMS calculated for H₂¹⁶O₂: *m*/*z* = 37.014 (MH⁺); determined: *m*/*z =* 37.014 (MH⁺).

### Example 3: 18-O isotopically labelled hydrogen peroxide, H₂¹⁸O₂

The 18-0 isotopically labelled hydrogen peroxide solution H₂¹⁸O₂ was prepared following the above-described general method from 2-ethylanthraquinone (2.84 g, 12 mmol), NaBH₄ 0.228 g, 6 mmol) and 18-0 isotopically labelled oxygen (¹⁸O₂). Description: colourless liquid. Mr: 38.01 gmol⁻¹. Yield: 63% (287 mg). ¹H NMR (600 MHz, acetone-d₆): δ 11.5 ppm. LC/ESI-HRMS calculated for H₂¹⁶O₂: *m*/*z* = 39.014 (MH⁺); determined: *m*/*z* = 39.016 (MH⁺).

## Claims

1. A method for the preparation of isotopically labelled hydrogen peroxide, **characterized by** including a reaction between the compound 2-alkylanthraquinone denoted with Formula (1) 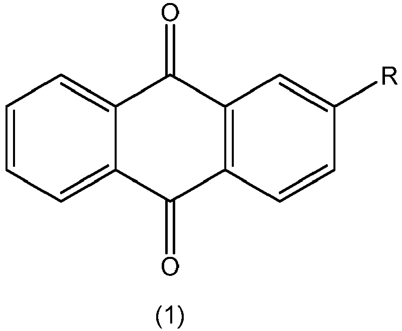
and a reducing agent NaBX₄ dissolved in alcohol, wherein the reaction is carried out in a mixture of toluene and methyl acetate in a volume ratio 1:1 at a temperature between 15 and 40 °C and in equivalent amounts of 2-alkylanthraquinone and the reducing agent NaBX₄, or up to 10 vol % excess of the reducing agent NaBX₄,
wherein the compound 2-alkylanthrahydroquinone denoted with Formula (3) is produced, 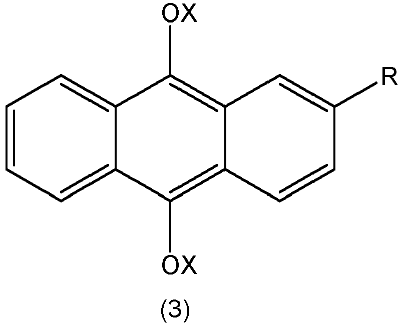 which is rinsed with water and oxidised with an equivalent amount of Y₂, to obtain an isotopically labelled hydrogen peroxide of Formula (5) 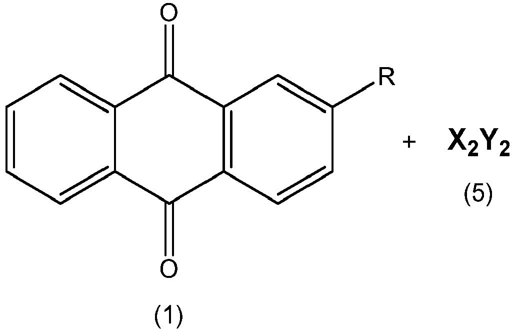
wherein R represents hydrogen, alkyl, substituted alkyl, cycloalkyl, substituted cycloalkyl, aryl or substituted aryl, and when
X represents hydrogen H, Y represents oxygen isotope ¹⁷O or ¹⁸O, and when
X represents deuterium, Y represents oxygen.

2. Method of claim1, wherein R represents ethyl, and when
X represents hydrogen (H), Y represents oxygen isotope ¹⁷O or ¹⁸O, and when X represents deuterium (D), Y represents oxygen.

## Patentansprüche

1. Verfahren zur Herstellung von isotopisch markiertem Wasserstoffperoxid,
**dadurch gekennzeichnet, dass** es eine Umsetzung zwischen der Verbindung 2-Alkylanthrachinon mit der Formel (1) 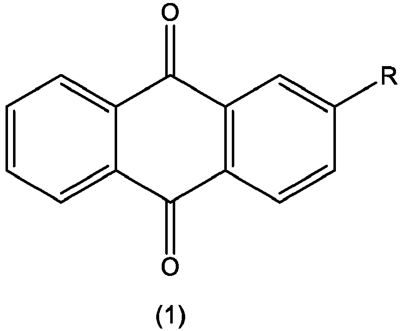
und einem in Alkohol gelösten Reduktionsmittel NaBX₄ umfasst, wobei die Umsetzung in einem Gemisch aus Toluol und Methylacetat in einem Volumenverhältnis 1: 1 bei einer Temperatur zwischen 15 und 40°C und in äquivalenten Mengen an 2-Alkylanthrachinon und dem Reduktionsmittel NaBX₄ oder bis zu 10 Vol. % Überschuss des Reduktionsmittels NaBX₄ durchgeführt wird,
wobei die mit der Formel (3) bezeichnete Verbindung 2-Alkylanthrachinon hergestellt wird, 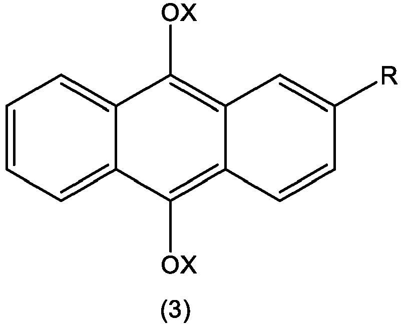 das mit Wasser gespült und mit einer äquivalenten Menge Y₂ oxidiert wird, um ein isotopisch markiertes Wasserstoffperoxid der Formel (5) zu erhalten 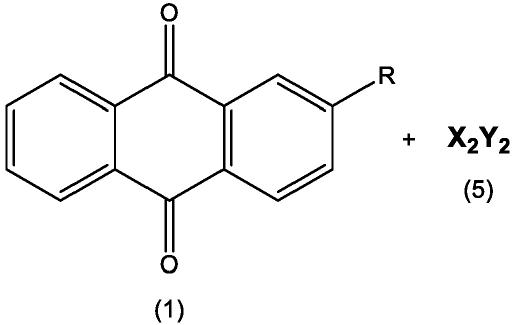
wobei R für Wasserstoff, Alkyl, substituiertes Alkyl, Cycloalkyl, substituiertes Cycloalkyl, Aryl oder substituiertes Aryl steht, und wenn
X für Wasserstoff H steht, Y für Sauerstoff-Isotop ¹⁷O oder ¹⁸O steht, und wenn X für Deuterium steht, Y für Sauerstoff steht.

2. Verfahren nach Anspruch 1, wobei R für Ethyl steht, und wenn
X für Wasserstoff (H) steht, Y für Sauerstoff-Isotop ¹⁷O oder ¹⁸O steht, und wenn
X für Deuterium (D) steht, Y für Sauerstoff steht.

## Revendications

1. Procédé de préparation de peroxyde d'hydrogène marqué isotopiquement, **caractérisé en ce qu'**il comprend une réaction entre le composé 2-alkyl-anthraquinone représenté par la formule (1) 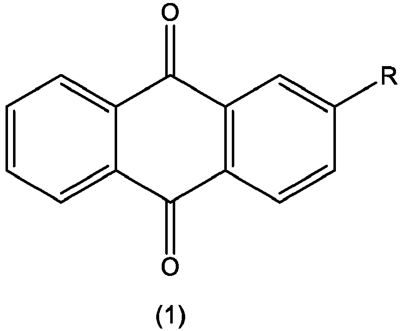
et un agent réducteur NaBX₄ dissous dans l'alcool, la réaction étant effectuée dans un mélange de toluène et d'acétate de méthyle dans un rapport volumique de 1 : 1 à une température comprise entre 15 et 40 °C et en quantités équivalentes de 2-alkyl-anthraquinone et d'agent réducteur NaBX₄, ou jusqu'à 10 % en volume d'excès d'agent réducteur NaBX₄,
le composé 2-alkyl-anthrahydroquinone représenté par la formule (3) étant produit, 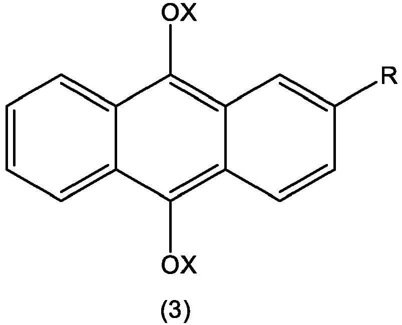 qui est rincé à l'eau et oxydé avec une quantité équivalente de Y₂, pour obtenir un peroxyde d'hydrogène marqué isotopiquement de formule (5) 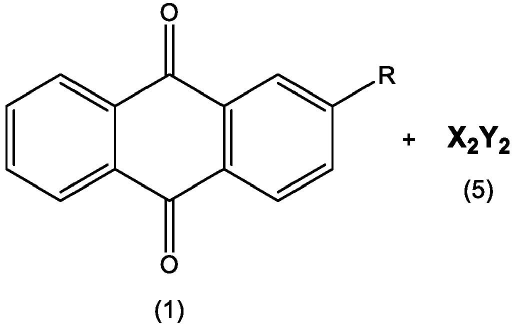
dans laquelle R représente de l'hydrogène, alkyle, alkyle substitué, cycloalkyle, cycloalkyle substitué, aryle ou aryle substitué, et lorsque
X représente de l'hydrogène H, Y représente un isotope d'oxygène ¹⁷O ou ¹⁸O, et lorsque
X représente du deutérium, Y représente de l'oxygène.

2. Procédé selon la revendication 1, dans lequel R représente de l'éthyle, et lorsque X représente de l'hydrogène (H), Y représente un isotope d'oxygène ¹⁷O ou ¹⁸O, et lorsque
X représente du deutérium (D), Y représente de l'oxygène.
